# EUROPÄISCHE PATENTSCHRIFT

(11) **EP 1 733 822 B1**
(45) Veröffentlichungstag und Bekanntmachung des Hinweises auf die Patenterteilung: **06.01.2010**
(21) Anmeldenummer: 06010151.6
(22) Anmeldetag: 17.05.2006
(51) Int. Cl.: B22C 7/02, F28D 9/00, F28F 3/02

(54) **Formsteifes Abstandselement aus Metall, Verfahren zu dessen Herstellung und Verwendung**
Metallic distance element with rigid shape, method for its manufacture and use
Élément de distance metallique avec forme rigide, procédé pour sa fabrication et utilisation

(30) Priorität: 18.05.2005 DE 102005023594
(43) Veröffentlichungstag der Anmeldung: 20.12.2006
(73) Patentinhaber: m.pore GmbH, 01277 Dresden (DE)
(72) Erfinder: Girlich, Dieter, Dr., 01309 Dresden (DE); Jordan, Manfred, 88161 Lindenberg (DE)
(74) Vertreter: Kaufmann, Sigfrid

(56) Entgegenhaltungen:
- GB-A- 759 958
- GB-A- 1 450 460
- US-B1- 6 622 786

## Beschreibung

Die Erfindung betrifft einen metallischen Leichtbauwerkstoff, der sich durch hohe Formsteifigkeit und reproduzierbare Werkstoffeigenschaften auszeichnet, und ein Gussverfahren zu dessen Herstellung. Der erfindungsgemäße zellulare Werkstoff in Form eines Abstandselementes kann vorteilhaft u. a. Anwendung finden als Kondensor, Dampferzeuger, Wärmetauscher, Filter, Katalysator, Latentwärmespeicher sowie für Vorrichtungen zur Energieabsorption, z. B. Stoßabsorption.

Abstandsgewirke sind aus dem Stand der Technik aus vielfältigen Anwendungen bei Kleidungsstücken, Miederwaren oder Schuhen, aber auch für technische Anwendungszwecke wie Autositzbezüge bekannt. Die Abstandsgewirke bestehen hierbei aus Kunststoffen wie Polyester, Polyamid, Polypropylen oder dergleichen. Derartige Abstandsgewirke zeichnen sich durch eine gewisse Druckfestigkeit einerseits und Elastizität andererseits aus (vgl. DE 195 30 928 A1, DE 44 00 239 A1,
DE 32 33 793) und werden auf speziellen Kettenwirkmaschinen (vgl. DE 28 32 481) hergestellt.

Für formstabile technische Anwendungen sind derartige Gewirke bestimmungsgemäß nicht geeignet und auch nicht vorgesehen.

Formsteife Abstandselemente sind aus GB759958 und US6622786 bekannt.

Demgegenüber steht für vielfältige technische Anwendungen die Aufgabe, extrem leichte, den spezifischen Anforderungen zielgenau entsprechende Strukturen bereitzustellen. Namentlich die Notwendigkeit, auf immer geringerem Raum Verlustwärme abzutragen, Materialaustausch im molekularen Bereich zu ermöglichen und Hochleistungsbauteile, -module oder -komponenten aller Art mit geringem Gewicht zur Verfügung zu stellen oder für sie formsteife, in extremer Leichtbauweise ausgeführte Arbeitsbühnen, Rahmen, Gehäuse oder dergleichen anzubieten, erfordert neue, "maßgeschneiderte" Werkstoffe.

Die unter diesen Aspekten in der technischen Praxis seit längerem bekannten und eingesetzten zellularen Werkstoffe aus Keramik, Kunststoff und Metall, wobei sich bei letzterem offenporige und geschlossenporige Metallschäume mehr und mehr durchsetzen, weisen jedoch den Nachteil auf, dass sie durch stochastische Prozesse erzeugt werden. Die Verteilung der Strukturparameter ermöglicht demzufolge die Reproduktion der Kennwerte, besonders der Festigkeitskomponente, nur in einem Bereich von +/-15% bezogen auf den angestrebten Sollwert.

Aufgabe der Erfindung ist es, diese Nachteile des Standes der Technik zu beseitigen, d. h., es sollen zellulare metallische Strukturen mit minimalem Gewicht erzeugt werden, die sich durch reproduzierbare mechanische Kennwerte auszeichnen, die den voraus berechneten entsprechen oder zumindest sehr nahe kommen. Zudem soll eine weitestgehende individuelle Anpassung des erfindungsgemäßen Werkstoffes hinsichtlich Kennwerte und möglicher Bauteilgeometrie an spezielle Anforderungen sowohl kurzfristig als auch kostengünstig möglich sein; parallel wird eine vergleichsweise hohe Produktivität gefordert.

Diese Aufgabe wird durch die Merkmale der Patentansprüche 1 und 8 gelöst; weitere vorteilhafte Ausführungen der Erfindung ergeben sich jeweils aus den abhängigen Unteransprüchen. Verwendungen, für die das erfindungsgemäße Abstandselement besonders prädestiniert ist, kann dem Anspruch 11 entnommen werden.

Das formsteife Abstandselement wird demzufolge dadurch erzeugt, dass ein zellularer metallischer Werkstoff durch das Gussverfahren nach dem verlorenen Modell-Verfahren hergestellt wird, wobei als verlorenes Modell ein Abstandszewirk, bestehend aus zumindest einer Außen- und Innenseite und einem dazwischen angeordneten textilen Füllmaterial, aus Polyester, Polyamid, Polypropylen oder dergleichen, das in eine feuerfeste Masse eingegossen und ausgebrannt wird, verwendet wird. Die Struktur wird anschließend in Metall umgeformt.

In einer bevorzugten Verfahrensvariante wird ein textiles Füllmaterial verwendet, dessen Fäden von einem weiteren Faden umwickelt sind. Die daraus resultierenden dickeren metallischen Stege sind u. a. hervorragend geeignet für den Transport von Wärme, sodass ein solches Element sehr vorteilhaft als Wärmetauscher Anwendung finden kann. Zudem können die Stege weiter dadurch verdickt werden, dass die umwickelten Fäden noch mit flüssigem Wachs beschichtet werden. Für diesen Fall wird ein saugfähiger Wickelfaden eingesetzt.

Erfindungsgemäß werden also mit der Kettenstricktechnologie hergestellte Modelle für die Fließtechnologie eingesetzt, die mit bestimmter, auch unterschiedlicher Fadenstärke gewebt sind, wobei verschiedenartige Fäden eingesetzt sein können, die gezielt nach Vorgaben, entsprechend der späteren Bauteil-Beanspruchung ausgewählt sind. Neben der Fadenstärke betrifft das den Fadenabstand, die Höhe und die Strukturierung des Elementes. Die Fäden sind bevorzugt nach den Hauptbelastungslinien, also unidirektional, verwebt; in jedem Fall sind sie regelmäßig angeordnet.

In einer Ausgestaltung der Erfindung können in dem nach dem Gießprozeß vorliegenden formsteifen Abstandselement aus Metall unidirektional angeordnete Glas-, Carbon- oder Kevlarfasern und/oder Metallfäden zur weiteren Steifigkeitserhöhung eingebaut sein, wobei besonders die Metallfäden auch spezielle Sonderfunktionen wie etwa Strom und Wärmefluss übernehmen können. Des Weiteren kann das so verstärkte zellulare Bauteil vorteilhafterweise noch mit Kunststoff oder Harz umgossen sein.

Zudem ist erfindungsgemäß vorgesehen, das metallische Abstandselement bei der Verwendung als Katalysator mit Nanopartikeln zu beschichten. Metallische Schichten können des Weiteren mittels Sintern oder galvanisch aufgebracht sein.

Neben den eingangs genannten vorteilhaften Einsatzmöglichkeiten kann mit dem metallischen Element auch ein gezieltes Design erreicht werden, was vorteilhaft mit Kenngrößen wie Steifigkeit, Durchlässigkeit, Abscheidegrad, z. B. innerhalb einer Meereswasserentsalzungsanlage, für die die Struktur dann aus Kupfer bestehen sollte, u. a. kombiniert werden kann.

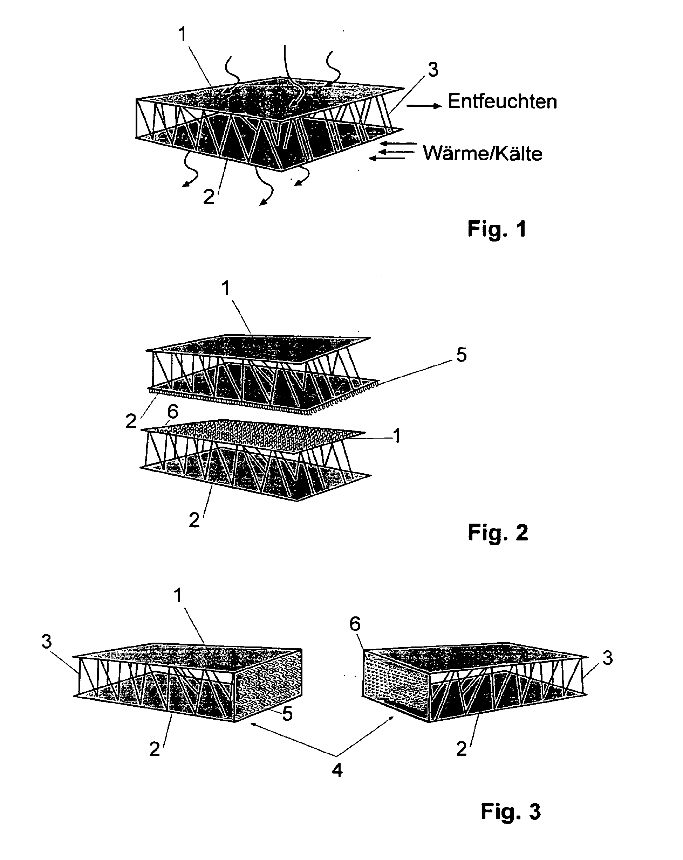

Ein Anwendungsbeispiel der Erfindung, nämlich die Ausführung als Kondensor, zeigt Fig. 1. Hieraus ist auch der grundsätzliche Aufbau des formsteifen Abstandselementes zu entnehmen. Das formsteife Abstandselement besteht aus zwei Lagen, einer Oberlage 1 und einer Unterlage 2, die durch die regelmäßig angeordneten fadenartigen metallischen Stege 3 beabstandet sind. Die Lagen 1 und 2 sind eben und zueinander parallel.

Fig. 2 zeigt zwei Abstandselemente, jeweils wiederum mit einer ebenen Oberseite 1 und Unterseite 2. Dabei ist die Unterseite 2 des oberen Abstandselementes mit Haken 5 versehen ist, die sich klettverschlussartig mit den Ösen 6 der Oberseite 1 des unteren Abstandselementes verbinden lassen.

In Fig. 3 ist dargestellt, dass in analoger Weise die Verbindung von quaderförmigen Abstandselementen auch seitlich dann möglich ist, wenn ausgebildete ebene Seitenflächen 4, die Haken 5 und Ösen 6 tragen, vorhanden sind.

In grundsätzlich gleicher Weise können auch Abstandselemente, die gekrümmte, vorzugsweise zueinander konzentrisch angeordnete Außenflächen besitzen, verbunden werden.

### Liste der verwendeten Bezugszeichen

- 1: Oberlage
- 2: Unterlage
- 3: fadenartige metallische Stege
- 4: Seitenflächen
- 5: Haken
- 6: Ösen

## Patentansprüche

1. Formsteifes Abstandselement, **dadurch gekennzeichnet, dass** es in einem Stück gegossen ist und es aus mehreren Lagen (1,2) aus Metall, die eine waben-, netz- oder maschenartige, regelmäßig offene Struktur aufweisen und durch regelmäßig angeordnete fadenartige metallische Stege (3) beabstandet sind, besteht.

2. Formsteifes Abstandselement nach Anspruch 1, **dadurch gekennzeichnet, dass** es ebene Lagen (1,2), die zueinander parallel angeordnet sind, aufweist.

3. Formsteifes Abstandselement nach Anspruch 1 und 2, **dadurch gekennzeichnet, dass** es zwei Außenlagen und Innenlagen, die zueinander parallel angeordnet sind, aufweist.

4. Formsteifes Abstandselement nach Anspruch 1, **dadurch gekennzeichnet, dass** es mehrere konzentrisch zueinander angeordnete Lagen aufweist.

5. Formsteifes Abstandselement nach Anspruch 1 bis 3, **dadurch gekennzeichnet, dass** die durch die flächigen Lagen aus Metall und die diese beabstandenden fadenartigen Stege (3) gebildete quaderförmige Struktur eine oder mehrere metallische Seitenflächen (4) aufweist.

6. Formsteifes Abstandselement nach Anspruch 1 und 5, **dadurch gekennzeichnet, dass** die metallischen Seitenflächen (4) eine waben-, netz- oder maschenartige, regelmäßig offene Struktur aufweisen.

7. Formsteifes Abstandselement nach einem der Ansprüche 1 bis 3 sowie 5 und 6, **dadurch gekennzeichnet, dass** die Seiten der Außenlagen (1; 2) und/oder der Seitenflächen (4), die den fadenartigen Stegen (3) abgewandt sind, Haken (5) und Ösen (6) tragen, die eine klettverschlussartige, lösbare Verbindung mit weiteren Modulen ermöglichen.

8. Verfahren zur Herstellung eines formsteifen Abstandselementes nach Anspruch 1 bis 7, wobei ein Abstandsgewirk aus Kunststoffen wie Polyester, Polyamid, Polypropylen oder dergleichen, bestehend aus einer jeweils durch Wirkware gebildeten Außen- und Innenseite und einem dazwischen angeordneten textilen, durch Fäden gebildeten Füllmaterial oder ein derartig aufgebautes mehrschichtiges Abstandsgewirk in eine feuerfeste Masse eingegossen, ausgebrannt und die so entstehenden gewirkegleichen Hohlräume mit Metall ausgegossen werden.

9. Verfahren nach Anspruch 8, **dadurch gekennzeichnet, dass** ein textiles Füllmaterial verwendet wird, dessen Fäden von einem weiteren, bevorzugt dickeren, Faden umwickelt sind.

10. Verfahren nach Anspruch 8 und 9, **dadurch gekennzeichnet, dass** ein Abstandsgewirk aus Kunststoff verwendet wird, in dessen Außen- und Innenflächen und/oder in dessen textilen Füllmaterial Fäden in Form von Glas-, Carbon- oder Kevlarrovings und/oder aus Metall eingewebt sind.

11. Verwendung des formsteifen Abstandselementes nach Anspruch 1 bis 7 als Kondensor, Dampferzeuger, Wärmetauscher, Filter, Katalysator, wobei das Metall zusätzlich mit Nanopartikeln, beispielsweise aus Titanoxid, beschichtet ist, Latentwärmespeicher sowie als Stoßabsorber.

## Claims

1. Rigid spacing element, **characterised in that** it is cast in one piece and comprises several layers (1,2) of metal which display a regularly open honeycomb-, net- or mesh-like structure and are spaced by way of regularly arranged filament-like metallic lattice elements (3).

2. Rigid spacing element according to Claim 1, **characterised in that** it possesses plane layers (1,2) which are arranged parallel to each other.

3. Rigid spacing element according to Claims 1 and 2, **characterised in that** it possesses two outer layers and inner layers which are arranged parallel to each other.

4. Rigid spacing element according to Claim 1, **characterised in that** it possesses several layers arranged concentrically to each other.

5. Rigid spacing element according to Claims 1 to 3, **characterised in that** the cuboid structure formed by the flat layers of metal and the filament-like lattice elements (3) serving to space said layers possesses one or several metallic side surfaces (4).

6. Rigid spacing element according to Claims 1 and 5, **characterised in that** the metallic side surfaces (4) display a regularly open honeycomb-, net- or mesh-like structure.

7. Rigid spacing element according to one of the Claims 1 to 3, and Claims 5 and 6, **characterised in that** the sides of the outer layers (1; 2) and/or the side surfaces (4) which face away from the filament-like lattice elements (3) possess hooks (5) and eyes (6) which permit a velcro-like, non-permanent connection with further modules.

8. Method to produce a rigid spacing element according to Claims 1 to 7, wherein a spacing fabric made of polymers such as polyester, polyamide, polypropylene or the like, comprising outer and inner sides formed by a knitted fabric and a textile filling material formed by filaments arranged between said sides, or a thus composed multi-layer spacing fabric is cast in a refractory mass and fired, and the arising hollow spaces in the style of a knitted fabric are cast out with metal.

9. Method according to Claim 8, **characterised in that** a textile filling material is used whose filaments are wrapped in a further, preferably thicker filament.

10. Method according to Claims 8 and 9, **characterised in that** a spacing fabric made of polymers is used into whose outer and inner surfaces and/or textile filling material filaments in the form of glass, carbon or Kevlar rovings and/or of metal are woven.

11. Application of the rigid spacing element according to Claims 1 to 7 as a condenser, steam generator, heat exchanger, filter, catalytic converter, wherein the metal is additionally coated with nanoparticles, for example of titanium oxide, latent heat accumulator or shock absorber.

## Revendications

1. Élément d'écartement de forme rigide, **caractérisé en ce qu'**il est moulé d'une pièce et qu'il est constitué de plusieurs couches (1,2) de métal qui ont une structure ouverte et régulière en nid d'abeilles, en mailles ou de forme réticulaire et qui sont écartées par des entretoises métalliques en forme de fil (3), disposées de façon régulière.

2. Élément d'écartement de forme rigide selon la revendication 1, **caractérisé en ce qu'**il présente des couches planes (1,2), parallèles les unes par rapport aux autres.

3. Élément d'écartement de forme rigide selon la revendication 1 ou 2, **caractérisé en ce qu'**il présente deux couches extérieures et intérieures, parallèles les unes par rapport aux autres.

4. Élément d'écartement de forme rigide selon la revendication 1, **caractérisé en ce qu'**il présente plusieurs couches concentriques les unes par rapport aux autres.

5. Élément d'écartement de forme rigide selon les revendications 1 à 3, **caractérisé en ce que** la structure en parallélépipède formée par les couches métalliques planes et les entretoises en forme de fil (3), qui les écartent, possède une ou plusieurs faces latérales métalliques (4).

6. Élément d'écartement de forme rigide selon les revendications 1 et 5, **caractérisé en ce que** les faces latérales métalliques (4) présentent une structure ouverte et régulière en nid d'abeilles, en mailles ou de forme réticulaire.

7. Élément d'écartement de forme rigide selon l'une des revendications 1 à 3, 5 et 6, **caractérisé en ce que** les côtés des couches extérieures (1 ; 2) et/ou des faces latérales (4), situés du côté opposé aux entretoises en forme de fil (3), sont munis de crochets (5) et de boucles (6) formant une sorte de fermeture velcro détachable pour l'assemblage d'autres modules.

8. Procédé de fabrication d'un élément d'écartement de forme rigide selon les revendications 1 à 7, **caractérisé en ce qu'**un tricot d'écartement en matière plastique (polyester, polyamide, polypropylène ou autre matière comparable), formé d'une face extérieure et d'une face intérieure en tricot et d'un matériau textile de remplissage intercalé, constitué de fils, ou un tricot d'écartement multicouche possédant une structure de ce type, est coulé dans une masse résistant au feu, puis brûlé, les cavités ainsi créées, de même forme que le tricot, étant ensuite remplies de métal.

9. Procédé selon la revendication 8, **caractérisé en ce que** le matériau textile de remplissage utilisé est composé de fils entourés d'un autre fil, de préférence plus épais.

10. Procédé selon les revendications 8 et 9, **caractérisé en ce que** le tricot d'écartement en matière plastique qui est utilisé présente des surfaces extérieures et intérieures et/ou un matériau textile de remplissage dans lesquels sont tissés des stratifils de verre, de carbone ou de kevlar et/ou des fils métalliques.

11. Utilisation de l'élément d'écartement de forme rigide selon les revendications 1 à 7 comme :
condensateur, générateur de vapeur, échangeur thermique, filtre, catalyseur, le métal étant en plus enduit de nanoparticules constituées par exemple d'oxyde de titane, accumulateur de chaleur latente ou absorbeur de choc.
